# EUROPÄISCHE PATENTSCHRIFT

(11) **EP 1 706 305 B1**
(45) Veröffentlichungstag und Bekanntmachung des Hinweises auf die Patenterteilung: **02.04.2008**
(21) Anmeldenummer: 04821085.0
(22) Anmeldetag: 07.12.2004
(51) Int. Cl.: B61D 15/00

(54) **FAHRZEUG MIT EINER ARBEITSBÜHNE**
VEHICLE COMPRISING A WORKING PLATFORM
VEHICULE COMPORTANT UNE PLATE-FORME DE TRAVAIL

(30) Priorität: 13.01.2004 AT 302004
(43) Veröffentlichungstag der Anmeldung: 04.10.2006
(73) Patentinhaber: Franz Plasser Bahnbaumaschinen-Industriegesellschaft m.b.H., 1010 Wien (AT)
(72) Erfinder: THEURER, Josef, A-1010 Wien (AT); GRUBER, Leopold, A-3270 Scheibbs (AT)
(86) Internationale Anmeldenummer: PCT/EP2004/053298
(87) Internationale Veröffentlichungsnummer: WO 2005/068272

(56) Entgegenhaltungen:
- WO-A-95/13242
- FR-A- 2 306 930
- FR-A- 2 828 183
- FR-A- 2 836 680
- US-A- 3 357 517
- US-A- 3 393 768

## Beschreibung

Die Erfindung betrifft ein Fahrzeug mit einem über Schienenfahrwerke auf einem Gleis verfahrbaren Fahrzeugrahmen und einer mit einer Teleskopsäule zur Höhenverstellung verbundenen Arbeitsbühne.

Aus der AT-B 406 359 (bzw. GB 2 288 380 B) ist bereits ein derartiges, als Arbeitswagen ausgebildetes Fahrzeug bekannt, bei dem eine horizontale Arbeitsplattform anhand von vier an deren Eckpunkten angeordneten, vertikalen Teleskopsäulen auf einem gleisverfahrbaren Fahrzeugrahmen gelagert ist. Die dergestalt höhenverstellbare Arbeitsplattform ist in mehrere Plattformabschnitte gegliedert. Zwei dieser Abschnitte sind als Hilfs-Arbeitsbühnen ausgebildet, die wiederum über je eine weitere vertikale Teleskopführung relativ zur Arbeitsplattform höhenverstellbar sind. Gemäß einer Ausbildungsvariante sind die Hilfs-Arbeitsbühnen jeweils durch einen eigenen Drehantrieb um eine vertikale Achse rotierbar auf der Teleskopführung gelagert und dadurch zusätzlich in horizontaler Ebene verschwenkbar.

In der DE 100 07 093 A1 ist ein weiteres gleisverfahrbares Arbeitsfahrzeug geoffenbart, das mit einer auf einem Teleskopmast montierten, höhenverstellbaren Arbeitsbühne ausgestattet ist. Diese ist mit dem Mast über eine Lafette verbunden, die eine horizontale Verstellung bzw. Distanzierung der Bühne relativ zum Mast ermöglicht. Der Teleskopmast seinerseits ist anhand eines drehbaren Sockels auf dem Fahrzeugrahmen gelagert und mitsamt der Arbeitsbühne um eine vertikale Achse rotier- bzw. verschwenkbar.

Die Aufgabe der vorliegenden Erfindung liegt nun in der Schaffung eines Fahrzeugs der gattungsgemäßen Art, das bei konstruktiv einfacher Ausführung gleichzeitig erweiterte Einsatzmöglichkeiten der Arbeitsbühne bietet.

Erfindungsgemäß wird diese Aufgabe mit einem Fahrzeug der eingangs genannten Art durch die im Kennzeichen von Anspruch 1 angeführten Merkmale gelöst.

Ein derart mit zwei Teleskopeinrichtungen und einem zwischen diesen positionierten Schwenkarm ausgebildetes Fahrzeug hat den besonderen Vorteil, daß die Arbeitsbühne ohne Schwierigkeiten in jegliche gewünschte Arbeitsposition relativ zur Oberleitung des Gleises verstellbar ist. Durch die Möglichkeit der horizontalen Rotierbarkeit der Bühne anhand der beiden Drehantriebe ist auf einfachste Weise gewährleistet, dass die Arbeitsbühne immer eine zum Fahrdraht parallele Position einnimmt, wobei eine zu starke Ausschwenkung in Richtung zum Nachbargleis durch eine simple Steuerung der Drehantriebe zuverlässig vermieden werden kann. Durch die Kombination von zwei separaten Teleskopsäulen ist es dabei - unter Beibehaltung konstruktiver Einfachheit und daraus resultierender Robustheit - problemlos möglich, mit der Arbeitsbühne eine besonders große Höhe zu erreichen. Gleichzeitig aber gestattet es die versetzte Anordnung der beiden Säulen, die Arbeitsbühne mitsamt ihrem Unterbau vorteilhafterweise einfach und schnell innerhalb des erlaubten Lichtraumprofiles für die Überstellfahrt unterzubringen.

Weitere Vorteile und Ausbildungen der Erfindung ergeben sich aus den Unteransprüchen und der Zeichnung.

Im folgenden wird die Erfindung anhand von in der Zeichnung dargestellten Ausführungsbeispielen näher beschrieben.
Es zeigen:
- Fig. 1 und 2: eine Seitenansicht bzw. Draufsicht eines erfindungsgemäß ausgebildeten Fahrzeuges,
- Fig. 3: eine vergrößerte Seitenansicht einer auf Teleskopsäulen gelagerten Arbeitsbühne in ihrer Außerbetriebstellung, und
- Fig. 4: eine Schrägansicht der Arbeitsbühne in der Einsatzposition.

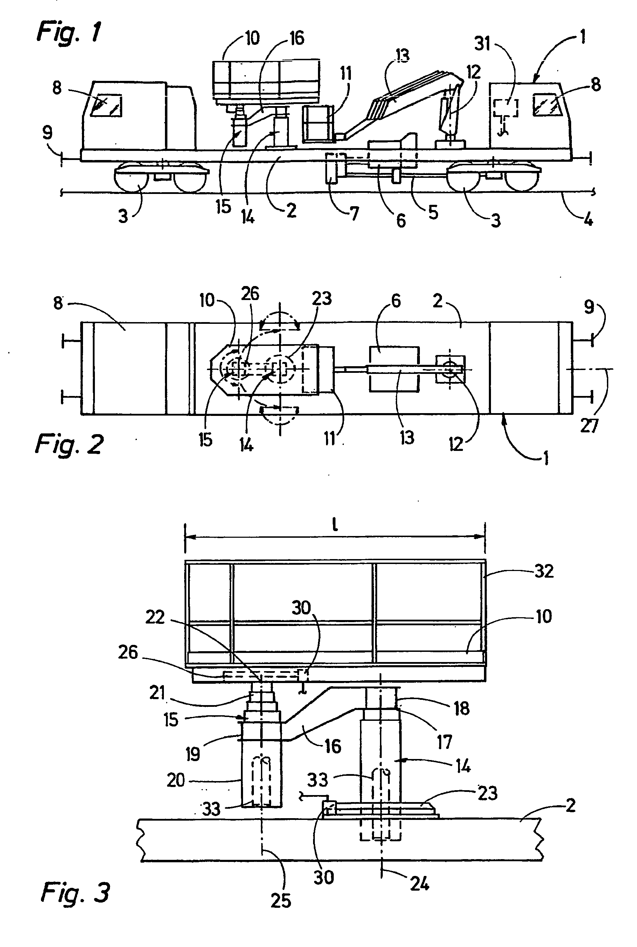

Ein in Fig. 1 und 2 schematisch dargestelltes, als sogenannter Motorturmwagen ausgebildetes Fahrzeug 1 weist einen Fahrzeugrahmen 2 auf, der über Schienenfahrwerke 3 auf einem Gleis 4 gelagert und auf diesem anhand eines Fahrantriebes 5 verfahrbar ist. Der Fahrantrieb 5 wird - ebenso wie die weiteren, noch zu beschreibenden Antriebe des Fahrzeuges 1 - über eine zentrale Kraftquelle 6 und ein Hydraulikaggregat 7 mit Energie versorgt. Weiters ist der Fahrzeugrahmen 2 endseitig mit Fahr- bzw. Arbeitskabinen 8 sowie mit Kupplungseinrichtungen 9 ausgestattet. Im plattformartigen mittleren Bereich des Fahrzeugrahmens 2 befinden sich eine hühonverstellbare Arbeitsbühne 10 sowie ein neben dieser angeordneter Arbeitskorb 11, der am freien Ende eines höhenverstellbaren und um eine vertikale Achse 12 rotierbaren Teleskopauslegers 13 montiert und mittels diesem frei verschwenkbar ist.

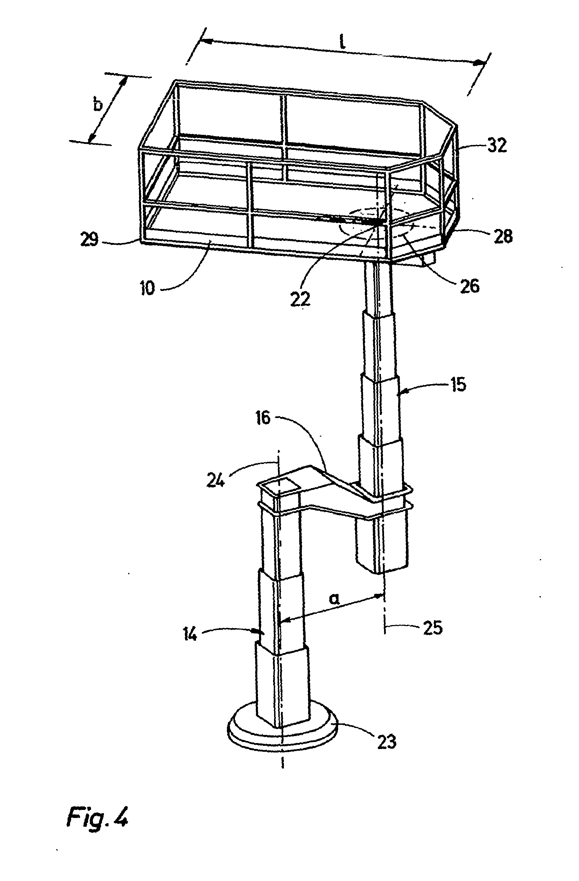

Wie im weiteren auch anhand der Fig. 3 genauer ersichtlich, ist die Arbeitsbühne 10 auf dem Fahrzeugrahmen 2 über eine - aus zwei je eine Längs- bzw. Drehachse 24,25 aufweisenden, vertikalen Teleskopsäulen 14,15 und einem zwischen diesen positionierten Schwenkarm 16 bestehende - Anordnung gelagert. Dabei ist nur die erste Teleskopsäule 14 direkt auf dem Fahrzeugrahmen 2 montiert und weist ein oberes Ende 17 auf, das mit einem Ende 18 des Schwenkarms 16 verbunden ist. Ein weiteres Ende 19 des Schwenkarms 16 ist mit einem unteren Ende 20 der zweiten Teleskopsäule 15 verbunden, die parallel zur ersten Teleskopsäule 14 und in einem Abstand a von etwa 1,2 Meter von dieser distanziert verläuft (siehe Fig. 4). Ein oberes Ende 21 der zweiten Teleskopsäule 15 ist schließlich - unter Bildung einer Anlenkstelle 22 - mit der Arbeitsbühne 10 verbunden. Der Schwenkarm 16 ist im vorliegenden Beispiel als im wesentlichen normal zu den Längsachsen 24,25 verlaufender Arm mit zwei leichten Knickstellen ausgebildet.

Ein erster, mit dem Fahrzeugrahmen 2 verbundener Drehantrieb 23 ist vorgesehen, um den Schwenkarm 16 mitsamt der zweiten Teleskopsäule 15 um die Längsachse 24 der ersten Teleskopsäule 14 rotieren zu lassen. An der Anlenkstelle 22 befindet sich ein zweiter Drehantrieb 26, anhand dessen die Arbeitsbühne 10 relativ zum Schwenkarm 16 um die Längsachse 25 der zweiten Teleskopsäule 15 verdrehbar ist. Wie aus Fig. 2 deutlich wird, beträgt der Drehwinkel des ersten Drehantriebes 23 ± 90° bezüglich einer Längsrichtung 27 des Fahrzeuges 1, während der Drehwinkel des zweiten Drehantriebes 26 ± 180° beträgt. Jedem Drehantrieb 23 und 26 ist ein eigener Winkelmesser 30 zugeordnet (Fig. 3), der mit einer - in einer der Kabinen 8 untergebrachten - Steuereinrichtung 31 für eine automatische Übertragung des jeweiligen Drehwinkels vom ersten auf den zweiten Drehantrieb 23,26 verbunden ist.

Eine Länge I der Arbeitsbühne 10 entspricht etwa ihrer zweifachen Breite b (siehe Fig. 4). Bezogen auf diese Länge I ist die Anlenkstelle 22 der zweiten Teleskopsäule 15 mit der Arbeitsbühne 10 etwa 25% von einem Längsende 28 bzw. 75% von einem gegenüberliegenden Längsende 29 der Arbeitsbühne 10 distanziert angeordnet. Sowohl an einer Schmal- als auch an beiden Längsseiten der Arbeitsbühne 10 ist jeweils eine (nicht näher dargestellte) Tür zum Öffnen eines Sicherheitsgitters 32 vorgesehen.

In Fig. 4 ist die - in den Fig. 1 bis 3 jeweils in ihrer Außerbetriebsstellung dargestellte - Arbeitsbühne 10 nun in der Einsatzstellung zu sehen, bei der die beiden Teleskopsäulen 14 und 15 zur Erreichung der maximalen Arbeitshöhe durch Beaufschlagung entsprechender Antriebe 33 (Fig. 3) ausgefahren sind. Mit Hilfe des ersten Drehantriebs 23 wird der Schwenkarm 16, entsprechend den Erfordernissen der auszuführenden Arbeiten, zur einen oder anderen Längsseite des Fahrzeuges 1 hin (um + bzw. - 90°) verschwenkt, wobei durch die Steuereinrichtung 31 der Drehwinkel automatisch derart auf den zweiten Drehantrieb 26 übertragen wird, daß die Arbeitsbühne parallel zum Fahrdraht des Gleises 4 positioniert ist. Wahlweise kann natürlich der zweite Drehantrieb 26 auch unabhängig von der automatischen Drehwinkelübertragung beaufschlagt werden. Die Distanzierung der beiden Teleskopsäulen 14,15 voneinander im Abstand a ist dabei hilfreich, die Arbeitsbühne 10 bezüglich der Maschinenquerrichtung von der Fahrzeugmitte distanziert zu positionieren. Durch die Steuereinrichtung 31 wird in Verbindung mit dem Winkelmesser 30 eine unzulässige Ausschwenkung der Arbeitsbühne 10 in den Bereich des Nachbargleises hinein zuverlässig ausgeschlossen.

## Patentansprüche

1. Fahrzeug mit einem über Schienenfahrwerke (3) auf einem Gleis (4) verfahrbaren Fahrzeugrahmen (2) und einer mit einer Teleskopsäule (14) zur Höhenverstellung verbundenen Arbeitsbühne (10), **dadurch gekennzeichnet, dass** zwischen einer ersten und einer parallel dazu verlaufenden zweiten Teleskopsäule (14,15) ein Schwenkarm (16) angeordnet ist, der mit einem Ende (18) mit dem oberen Ende (17) der ersten Teleskopsäule (14) und mit dem anderen Ende (19) mit dem unteren Ende (20) der zweiten Teleskopsäule (15) verbunden ist, deren oberes Ende (21) unter Bildung einer Anlenkstelle (22) mit der Arbeitsbühne (10) verbunden ist, wobei durch einen ersten Drehantrieb (23) der Schwenkarm (16) mitsamt der zweiten Teleskopsäule (15) um eine Drehachse (24) drehbar ist und durch einen zweiten Drehantrieb (26) die Arbeitsbühne (10) relativ zum Schwenkarm (16) verdrehbar ist.

2. Fahrzeug nach Anspruch 1, **dadurch gekennzeichnet, dass** die Arbeitsbühne (10) eine etwa einer zweifachen Breite (b) entsprechende Länge (I) aufweist, wobei die Anlenkstelle (22) der zweiten Teleskopsäule (15) mit der Arbeitsbühne (10) - bezogen auf die Länge (I) der Arbeitsbühne (10) - etwa 25 % von einem Längsende (28) bzw. 75 % von einem gegenüberliegenden Längsende (29) der Arbeitsbühne (10) distanziert angeordnet ist.

3. Fahrzeug nach Anspruch 1 oder 2, **dadurch gekennzeichnet, dass** der Abstand (a) der Teleskopsäulen (14,15) etwa 1,2 Meter beträgt.

4. Fahrzeug nach einem der Ansprüche 1,2 oder 3, **dadurch gekennzeichnet, dass** - jeweils bezüglich einer Längsrichtung (27) des Fahrzeuges (1) - der Drehwinkel des ersten Drehantriebes (23) ± 90° und der Drehwinkel des zweiten Drehantriebes (26) ± 180° beträgt.

5. Fahrzeug nach einem der Ansprüche 1 bis 4, **dadurch gekennzeichnet, dass** jedem Drehantrieb (23,26) ein Winkelmesser (30) zugeordnet und eine Steuereinrichtung (31) für eine automatische Übertragung des jeweiligen Drehwinkels vom ersten auf den zweiten Drehantrieb (23,26) vorgesehen ist.

## Claims

1. A vehicle including a vehicle frame (2), mobile on a track (4) by means of on-track undercarriages (3), and a work platform (10) connected for vertical adjustment to a telescopic column (14), **characterized in that** a swivel arm (16) is arranged between a first telescopic column (14) and a second telescopic column (15) extending parallel to the former, the swivel arm (16) being connected at one end (18) to the upper end (17) of the first telescopic column (14) and at the other end (19) to the lower end (20) of the second telescopic column (15), the upper end (21) of the latter being connected to the work platform (10) with formation of an articulation point (22), wherein the swivel arm (16) together with the second telescopic column (15) is rotatable about an axis of rotation (24) by means of a first rotation drive (23), and the work platform (10) is rotatable relative to the swivel arm (16) by means of a second rotation drive (26).

2. A vehicle according to claim 1, **characterized in that** the work platform (10) has a length (I) corresponding to approximately twice a width (b), wherein the articulation point (22) of the second telescopic column (15) and the work platform (10) is arranged - with reference to the length (I) of the work platform (10) - at a distance of approximately 25% from one longitudinal end (28) or 75% from an opposite longitudinal end (29) of the work platform (10).

3. A vehicle according to claim 1 or 2, **characterized in that** the distance (a) of the telescopic columns (14, 15) is about 1.2 meters.

4. A vehicle according to one of claims 1, 2 or 3, **characterized in that** the angle of rotation of the first rotation drive (23) is ± 90°, and the angle of rotation of the second rotation drive (26) is ± 180° - with regard to a longitudinal direction (27) of the vehicle (1) in each case.

5. A vehicle according to one of claims 1 to 4, **characterized in that** a respective goniometer (30) is associated with each rotation drive (23, 26), and a control device (31) is provided for automatic transference of the respective angle of rotation from the first to the second rotation drive (23, 26).

## Revendications

1. Véhicule comprenant un châssis de véhicule (2) déplaçable sur une voie (4) par le biais de bogies pour rails (3) et une plate-forme de travail (10) connectée à une colonne télescopique (14) pour le réglage en hauteur, **caractérisé en ce que** l'on dispose entre une première colonne télescopique et une deuxième colonne télescopique s'étendant parallèlement à la première (14, 15) un bras pivotant (16) qui est connecté par une extrémité (18) à l'extrémité supérieure (17) de la première colonne télescopique (14) et par l'autre extrémité (19) à l'extrémité inférieure (20) de la deuxième colonne télescopique (15), dont l'extrémité supérieure (21) est connectée à la plate-forme de travail (10) en formant un point d'articulation (22), le bras pivotant (16) pouvant tourner par un premier entraînement en rotation (23) conjointement avec la deuxième colonne télescopique (15) autour d'un axe de rotation (24) et la plate-forme de travail (10) pouvant être tournée par un deuxième entraînement en rotation (26) par rapport au bras pivotant (16).

2. Véhicule selon la revendication 1, **caractérisé en ce que** la plate-forme de travail (10) présente une longueur (1) correspondant approximativement à deux fois la largeur (b), le point d'articulation (22) de la deuxième colonne télescopique (15) avec la plate-forme de travail (10) étant espacé - par rapport à la longueur (1) de la plate-forme de travail (10) d'environ 25 % d'une extrémité longitudinale (28) ou de 75 % d'une extrémité longitudinale opposée (29) de la plate-forme de travail (10).

3. Véhicule selon la revendication 1 ou 2, **caractérisé en ce que** la distance (a) entre les colonnes télescopiques (14, 15) est d'environ 1,2 mètre.

4. Véhicule selon l'une quelconque des revendications 1, 2 ou 3, **caractérisé en ce que** l'angle de rotation du premier entraînement en rotation (23) est d'environ ± 90° et l'angle de rotation du deuxième entraînement en rotation (26) est d'environ ± 180° par rapport à chaque fois à une direction longitudinale (27) du véhicule (1).

5. Véhicule selon l'une quelconque des revendications 1 à 4, **caractérisé en ce que** chaque entraînement en rotation (23, 26) est associé à un dispositif de mesure d'angle (30) et l'on prévoit un dispositif de commande (31) pour un transfert automatique de chaque angle de rotation du premier au deuxième entraînement en rotation (23, 26).
